# EUROPEAN PATENT APPLICATION

(11) **EP 3 153 232 A2**
(43) Date of publication of application: **12.04.2017**
(21) Application number: 14907809.9
(22) Date of filing: 10.08.2014
(51) Int. Cl.: B01J 20/00, C09K 3/32

(54) **ABSORBENT FOR HYDROCARBON AND OIL SPILLS**

(30) Priority: 02.08.2013 EC SP13012822
(71) Applicant: Rodriguez Webster, José Edgar, C.P. 090615 Guayaquil Guayas (EC)
(72) Inventor: Rodriguez Webster, José Edgar, C.P. 090615 Guayaquil Guayas (EC)
(74) Representative: Martin Santos, Victoria Sofia
(86) International application number: PCT/EC2014/000002
(87) International publication number: WO 2016/091269

(57) **Abstract**

The invention relates to an absorbent product for hydrocarbons and oils, intended for the industrial field. The product employs vegetable fibres together with polyterpene resin and/or resin from asphaltenes/maltenes to create an adsorbent and absorbent product having an immediate sequestering action and providing a micro- and macro-encapsulation effect, used for hydrocarbon or oil spills.

## Description

### B. Indication of the technical field to which the invention relates.

ABSORBENT FOR HYDROCARBON AND OIL SPILLS is a product aimed to the industrial sector, which can absorb any spilled hydrocarbon, faster and more efficiently.

### C. Indication of the state of the art prior to the filing date.

Over the last decades of hydrocarbon spills, especially oil and derivatives, caused by various reasons either at the time of extraction or at the time of transportation have been the main precursors of environmental pollution of our ecosystems, in many cases causing an irreparable, and irreversible damages and with a high economic and social cost, damages that directly harm our planet.

The oil spill is a discharge of hydrocarbons that occurs mainly due to an accident or improper practices in the management of petroleum derivatives, which pollutes the environment, especially the sea, a way through which thousands of million gallons of petroleum products are transported each year. During a spill, the fauna and flora are catastrophically injured, and its effects will persist over the years, causing damages in many cases irreversible. In addition, the environmental remediation of the sites affected by a spills will represent a high economic cost in order to mitigate as much as possible the potential effects of the spill.

The immediate environmental effects of oil spills at sea, are the fish or marine animals can incorporate persistent organic pollutants and the predators that consume them, can pass on the poisoning oil from one animal to another through the food chain, threatening even the safety for human consumption, which depending on where the oil spill occurred, fish could ingest high amounts of pollutants containing the spilled oil, becoming in a long-term a threat for human health because the pollutants that are dispersed during an oil spill, are harmful elements that remain at sea for long periods of time.

Moreover, a direct affliction is suffered by the birds that fly over the oceans in search of food, as birds having contact with the spilled oil, will lose the ability of their plumage to stay dry, reason why the in the vast majority of oil spills that have occurred throughout history, it has been observed that birds end up dying of cold and hunger, due to the inability to fly over the airspace and continue their normal life cycle.

The flora of the ecosystem where there an oil spill has occurred also suffers an affliction, because when an oil spill occurs, if it is on the ocean, a hydrocarbon layer will concentrate on the sea surface, obstructing the passage of light to the seabed, which leads to a direct result of affecting the process of photosynthesis of many of the primary organisms, which are also the main organisms that support the marine food chain.

Another negative aspect of oil spills are those that have to do with the beaches and marine coasts, to which the contamination of an oil spill will arrive by the direct action of the tides that drag towards the coasts all these pollutants, forcing the temporary closure of the beaches and coastal areas until they are cleaned, because the contaminated water reaching the coasts poses a threat to public health in the case of having contact with the skin or if ingested by mistake.

To treat spills of oil or its derivatives, currently, there are several products that can mitigate oil spills, for example:
a) To mitigate hydrocarbon and oil spills in the soil, it corresponds to the products that operate with processes of absorption in solids, and adsorption with earths such as vermiculite, bentonite, diatomite, pearlite, illite, kaolinite, esmegtite, chlorite, attapulgite, sepiolite, arlite, among others; with or without physical activation treatments.
b) To mitigate hydrocarbon and oil spills on water, absorbent pads, absorbent rolls, polypropylene synthetic fibers, synthetic polymers, PVC containment barriers and absorbent socks are available, with a low recovery of oil spill because they cannot cover the entire oil spill.
c) To mitigate hydrocarbon and oil spills in soil and on water, natural SHPAGNUM moss are available, which are modified and conditioned with bacteria, and other natural fibers, with relatively medium and high density, and which do not help the recovery of spilled oil on water, due to their limited absorbing action, and because they sink once are saturated with water.

The problem of the products currently available in the state of the art, is that they are not efficiently enough to absorb hydrocarbon and oil spills in the environment where they are used, and because due to the volume of some of these products available in the market and their storage and transportation before, during and after a spill response causes logistics and cost problems.

The disadvantages of the use of organic material such as bark, peat, sawdust, paper pulp, cork, feathers, straw, wool and even human hair in the control of an oil spill are because by the same nature of the product, handling them is difficult to manage, and once applied to oil spill they are difficulty to remove.

The disadvantages of using a synthetic product mainly polypropylene, is the limited effectiveness on weathered or more viscous hydrocarbons, besides its difficulty to decompose with celerity, limiting the options of being used.

The products currently offered, both organic and synthetic, operate only as absorbents, do not ensure stability when in storage after their use, thus begin to leach the product recovered, worsening in many cases the first problem caused by the spill, because if the products once used are placed in an outdoor field, what happens is that we will moving the pollution occurred in a marine environment to a land environment.

The absorbent product for hydrocarbons and oils of the captioned invention is an encapsulant that catches hydrocarbons and oil spills on water, operates by micro and macro encapsulation, is usable on any light, medium and heavy oils, as well as on vegetable oils, and that physically behaves well when operating with the phenomena of capillarity, absorption, adsorption and sequestration by molecular adhesion.

The absorbent product for hydrocarbons and oils of the present invention, does not affect the environment, its active components are friendly to the environment, it is a fuel with a low caloric load, non-flammable, insoluble in water, and it is hydrophobic - lipophilic.

The colourless hydrocarbons such as gasoline, diesel, dielectric oil or other, if spilled, are very difficult for a visual identification; for this scenario, the absorbent product of hydrocarbons and oils of the present invention contains a reagent that changes the spill colour to blue, facilitating the spill recovery.

The absorbent product for hydrocarbons and oils of the invention meets the ASTM F726-06 standard with results of laboratory tests for hydrocarbon adsorption in short tests of 6.823 when the specification states a minimum of 5.5; the ASTM F716-06 standard with results of laboratory tests for hydrocarbon adsorption test in long tests of 24.35 when the specification establishes a maximum of 25; the ASTM D-482 standard with results of laboratory tests for testing ash of 1,1486 when the specification establishes a maximum of 10.

The absorbent product for hydrocarbons and oils reaches a retention power in medium hydrocarbons with a viscosity of 300+/-30cp, higher than 600% and with a rate of drainage of less than 25% after 180 minutes. The product is recommended for a containment of 500% 600% by weight.

The absorbent product for hydrocarbons and oils also complies with the standard: NRF-252-PEMEX-2012 on Absorbents and Adsorbents Materials for Hydrocarbons and Oils.

The main advantages, and not the only ones, that the absorbent product for hydrocarbons and oils have, are:
- It is easy to apply on, and to pick from, to the spill.
- It remains floating on the water for long periods.
- It is non-toxic, it does not drain the encapsulated oils, and it does not pollute the environment.
- It is a biodegradable product.
- It allows the detection of transparent hydrocarbons for it turns blue at the moment of making contact.
- It facilitates tis transportation and storage.
- More than 99% of the spilled oil is recovered in one single application.
- It complies with Mexican Standard NRF-252-PEMEX-2012, meets the American Standards ASTM F716-06, F726-06, complies with the Standard NFPS No. 471-2000, and also conforms to the Ecuadorian Standard INEN No. 2266:2013.
- It has more than 1.000.000 of encapsulating particles per Kg of product.

### D. Detailed description of the invention in a clear and complete manner.

The absorbent product for hydrocarbons and oils of the present invention comprises selecting a vegetal fiber that can be of the species *Ochoroma pyramidale,* which by a first sawing process, pieces of suitable sizes of the vegetable fiber are obtained, in order to proceed with the desorption process, wherein the vegetable fibers previously sawed, are subjected to a heat treatment with temperatures that will volatilize all organic components of the cells of the wood (T is higher than or equal to 60° degrees Celsius), thus leaving only the cellulose which has been opened in all their cells, then the treated plant fiber proceeds to a second sawing process to convert the plant fiber into particles of vegetable fiber with a size between 1 to 6 millimetres and a density less than less than 500 kg/m3; the obtained particles of fiber continue with the process of adsorption, which consists of on waterproofing them with the hydrocarbons of the cut 180 degrees to 350 degrees Celsius, from the atmospheric distillation of oil, then after this procedure to accomplish in the particles of vegetable fiber a oleophilic-hydrophobic effect, then finally to proceed with particles of vegetable fiber to a process of adsorption with polyterpene and/or asphaltenes/maltenes resins.

The absorbent product for hydrocarbons and oils of the invention fulfils an adsorbent and absorbent function, with immediate sequestering action, obtaining an encapsulant effect of micro and macro action, which can be used in oil spills such as gasoline, diesel, lubricating oils, edible oils, etc.

Having described the nature and scope of the invention and how to put it into practice, here it is claimed as exclusive property right:

## Claims

1. An absorbent product for hydrocarbons and oils comprising: a waterproofed particle of vegetable fiber; a polyterpene resin and/or resin from asphaltenes/maltenes incorporated into the particle of vegetable fiber.

2. An absorbent product for hydrocarbons and oils according to claim 1, wherein the particle of vegetable fiber has a density less than 500 kg/m3.

3. An absorbent product for hydrocarbons and oils according to claim 2, wherein the particle of vegetable fiber may have a size between 1 and 6 millimetres.

4. An absorbent product for hydrocarbons and oils according to claim 3, wherein the polyterpene resin and/or resin from asphaltenes/maltenes are incorporated into the particle of vegetable fiber by a hypersorption procedure.
